# EUROPÄISCHE PATENTSCHRIFT

(11) **EP 1 578 623 B1**
(45) Veröffentlichungstag und Bekanntmachung des Hinweises auf die Patenterteilung: **01.02.2012**
(21) Anmeldenummer: 03788878.1
(22) Anmeldetag: 15.12.2003
(51) Int. Cl.: B60C 23/04, H01L 41/113

(54) **VORRICHTUNG ZUR VERSORGUNG MIT ELEKTRISCHER ENERGIE, VON AN EINEM BEWEGLICHEN ELEMENT BEFESTIGTEM ELEKTRISCHEN VERBRAUCHER**
DEVICE FOR SUPPLYING WITH ELECTRIC ENERGY AN ELECTRIC CONSUMER MOUNTED ON A MOVABLE ELEMENT
DISPOSITIF SERVANT A FOURNIR DE L'ENERGIE ELECTRIQUE A UN RECEPTEUR ELECTRIQUE FIXE SUR UN ELEMENT MOBILE

(30) Priorität: 17.12.2002 DE 10259056
(43) Veröffentlichungstag der Anmeldung: 28.09.2005
(73) Patentinhaber: EnOcean GmbH, 82041 Oberhaching (DE)
(72) Erfinder: SCHMIDT, Frank, 85604 Zorneding (DE)
(74) Vertreter: Epping, Wilhelm
(86) Internationale Anmeldenummer: PCT/DE2003/004140
(87) Internationale Veröffentlichungsnummer: WO 2004/054823

(56) Entgegenhaltungen:
- EP-A- 0 673 102
- EP-A- 1 043 577
- US-A- 4 384 482
- US-A- 4 510 484

## Beschreibung

Die Erfindung betrifft eine Vorrichtung zur Versorgung mit elektrischer Energie von einem an einem beweglichem Element befestigtem elektrischen Verbraucher, wobei der Verbraucher ein energieautarker Verbraucher ist, so daß zu- und abführende elektrische Leitungen zur Versorgung des Verbrauchers mit elektrischer Energie nicht benötigt werden.

Energieautarke Verbraucher finden insbesondere dann Verwendung, wenn bewegliche oder rotierende Teile mittels Sensoren, z. B. Funk-Sensoren, auf bestimmte physikalische Parameter wie Temperatur, Druck, Torsion, Dehnung usw., überwacht oder vermessen werden sollen. Solche rotierenden Teile sind zum Beispiel Radachsen, Wellen, Fahrzeugräder, Maschinenteile und ähnliches.

Für Verbraucher dieser Art bieten sich zur Energieversorgung Lösungen an, wie sie in der US-Patentschrift US 3,596,262 beschrieben sind. Hieraus ist ein Sensor, mit eigener induktiver Energieversorgung bekannt. Dieser Sensor ist an ein bewegliches Element befestigt, und die Energieversorgung des Sensors wird induktiv durch einen schwingenden magnetischen Kern innerhalb einer Spule gelöst.

Des weiteren ist aus US 3,596,262 bekannt, daß ein induktiver Sensor, auf ein rotierendes Element montiert ist und sich damit relativ zu einer gegenüberliegenden Verzahnung bewegend durch diese relative Bewegung des Sensors, zu der Verzahnung, die Induktion einer elektrischen Spannung bewirkt wird.

Die Druckschrift US 4,510,484 A zeigt einen piezoelektrischen Wandler zur Versorgung einer Vorrichtung zur Überwachung von Reifendrücken von zum Beispiel Automobilen, wobei ein piezoelektrischer Wandler mit dem elektrischen Verbraucher verbunden ist, und der piezoelektrische Wandler ein Wandlerelement aufweist, zur Umwandlung von mechanischer Energie in elektrische Energie. Dabei ist das Wandlerelement an einem Ende mit einer Schwungmasse verbunden und an dem gegenüberliegenden Ende fest mit der Vorrichtung verbunden. Durch Bewegung des Fahrzeugrades durch Unwuchten und Beschleunigungen der Drehbewegung des Fahrzeugrades wird das schwingende System, bestehend aus Schwungmasse und elastischem Wandlerelement zu Schwingungen angeregt. Das schwingende System spannt dabei eine Schwingungsebene auf, die parallel zu einer durch die Rotation gebildeten Fliehkraft ist.

Die Druckschrift EP 673102 A zeigt eine Vorrichtung zur Versorgung mit elektrischer Energie von an einem beweglichen Element befestigtem elektrischen Verbraucher, wobei der elektrische Verbraucher mit einem piezoelektrischen Wandlerelement verbunden ist. Das Wandlerelement dient zur Umwandlung mechanischer in elektrischer Energie, und bildet verbunden mit einer Schwungmasse ein schwingendes System. Der elektrische Verbraucher verfügt über eine Gleichrichtereinrichtung, die die vom Wandlerelement gelieferte Wechselspannung gleichrichtet und zeigt weiterhin eine Speichereinrichtung, zur Speicherung der vom Wandlerelement gelieferten elektrischen Energie.

Die Druckschrift US 4,384,482 A zeigt, ähnlich wie Druckschrift US 4,510,484 A eine Vorrichtung zur Überwachung von Reifenluftdrücken von zum Beispiel Kraftfahrzeugreifen mit einem piezoelektrischen Wandler, zur Wandlung von mechanischer in elektrischer Energie wobei der piezoelektrische Wandler mit dem elektrischen Verbraucher verbunden ist. Das Wandlerelement des piezoelektrischen Wandlers ist mit einer Schwungmasse verbunden und an einem der Schwungmasse gegenüber liegenden Ende mit der Vorrichtung fest verankert. Das Wandlerelement weist eine Elastizität auf, so dass das schwingende System mit der Schwungmasse durch die Änderung der Bewegung des Rades in Schwingungen versetzt wird. Dabei schwingt das schwingende System ebenfalls wie in Druckschrift US 4,510,484 A in einer Schwingungsebene die parallel zu einer durch die Rotation erzeugten beziehungsweise hervorgerufenen Fliehkraft ist.

Nachteilig an den bekannten Anordnungen ist die mechanisch aufwendige und anfällige Konstruktion. Des weiteren ist insbesondere bei der Energiegewinnung durch den beweglichen Kern eine hohe Bewegungsenergie des bewegten Elements erforderlich, um das System ins Schwingen zu bringen. Weiter wird, insbesondere bei den auf rotierenden Systemen angeordneten Wandlern die Energiegewinnung durch das Kraftfeld der Fliehkraft unvorteilhaft beeinflusst. Des weiteren sind alle aus dieser Druckschrift bekannten Maßnahmen aufwendig und kostenintensiv herzustellen.

Es ist demzufolge die Aufgabe der Erfindung, den Wirkungsgrad eines Wandlers zur Versorgung mit elektrischer Energie von an einem rotierendem Element angeordneten elektrischen Verbraucher, unabhängig von der Drehzahl zu gestalten.

Diese Aufgabe wird gelöst durch eine Vorrichtung zur Versorgung mit elektrischer Energie von an einem rotierendem Element befestigtem elektrischen Verbraucher gemäß dem Anspruch 1 Es ist dabei ein weiterer Gedanke der Erfindung, die Elastizität des Wandler-Elements verbunden mit der Schwungmasse, für ein dadurch gebildetes schwingendes System eine Resonanzfrequenz einzustellen, die es erlaubt, auch bei geringen Schwingungsenergien des bewegten Körpers elektrische Energie durch das Wandlerelement zu erzeugen. Die elektrische Energie des Wandlerelements wird dabei über elektrische Anschlüsse dem elektrischen Verbraucher, wie z. B. einem Funksender und/oder einem Sensor zugeführt.

In einer vorteilhaften Ausführungsform ist die Elastizität des Wandlerelements in einer Schwingungsebene besonders gegeben. Sind durch die Bewegung des bewegten Elementes bestimmte Zustände zu erwarten, die das Wandlerelement in einer Auslenkung "festhalten", so wird dies dadurch verhindert, daß in dieser Richtung der Kraft, die dies bewirkt, durch das Wandlerelement nahezu keine Elastizität gegeben ist. Damit wirken nur die Komponenten der Schwingungsenergie und Kraft, die in der Ebene der Elastizität des Wandlerelements gerichtet sind. Bei Rotationsbewegungen würde die auftretende Fliehkraft das Wandlerelement in ihre Richtung verformen, und somit das Wandlerelement in der Auslenkung "festhalten".

Es ist gemäß der Erfindung vorgesehen , daß auftretende Fliehkräfte, wie sie der bei einer Rotation des bewegten Elements auftreten, keine Auslenkung des Wandlerelements bewirken, sondern ausschließlich durch die Gewichtskraft der Masse, auf das Wandlerelement wechselseitig wirkenden Kräfte.

Ist die Rotationsachse des rotierenden Elements ungleich zu der Richtung der Gewichtskraft, so wirkt bei einer Rotation des rotierenden Elementes die Gewichtskraft wechselseitig auf die Schwungmasse und regt das schwindende System zu Schwingungen an. Diese Wirkung ist dann am höchsten, wenn die Rotationsachse senkrecht zur Fliehkraft angeordnet ist.

Die in Richtung der Fliehkraft wirkenden Kräftekomponenten werden einfach und zuverlässig verhindert, indem eine Elastizität des Wandlerelements in Richtung dieser Kraft unterdrückt wird, bzw. geringer ausgestaltet ist als die Elastizität in Richtung der Schwingungsebene.

Als Wandlerelement bieten sich verschiedene physikalische Prinzipien an:
- ein piezoelektrisches Element,
- ein magnetostriktives Element,
- ein magnetoelektrisches,
- oder ein kapazitives Element.

Nicht alle elektrischen Verbraucher sind geeignet, eine beliebige Wechselspannung, wie sie durch das Wandlerelement geliefert wird, zu verarbeiten. Aus diesem Grunde ist in einer vorteilhaften Ausführungsform der elektrische Verbraucher mit einer Gleichrichtereinrichtung ausgestattet, die die vom Wandlerelement gelieferte Wechselspannung gleichrichtet und an den elektrischen Verbraucher weiterleitet.

Als elektrischer Verbraucher eignet sich beispielsweise ein Funksensor, der gemessene oder erfaßte physikalische Parameter mit einem Funksignal an eine Auswerteeinrichtung weiterleitet. Für elektrische Verbraucher, die auch dann ausreichend elektrische Energie benötigen um ihre Aufgabe zu erfüllen, wenn das bewegte Element in Ruhe ist, oder nicht ausreichend Energie durch das Wandlerelement geliefert wird, ist in einer vorteilhaften Ausführungsform der Erfindung eine Speichereinrichtung in dem elektrischen Verbraucher integriert, in der die von dem Wandlerelement gelieferte elektrische Energie zwischengespeichert wird, und bedarfsgerecht an den elektrischen Verbraucher weitergeleitet wird.

Somit ist gegeben, daß beispielsweise Funk-Sensoren ungeachtet einer Bewegung des bewegten Elementes erfaßte physikalische Parameter nach vorbestimmten Abläufen oder Zeitabständen über ein Funksignal an eine Auswerteeinrichtung senden können.

Um Kraftkomponenten auszuschließen, die nicht erwünscht sind, wie die o. g. Fliehkraft bei einem rotierenden Element, ist es vorteilhaft, das Wandlerelement in Form eines dünnen flächigen Rechteckes auszuführen, so daß parallel zur flächigen Ausbreitung eine deutlich geringere Elastizität des Wandlerelements gegeben ist.

Das Schwingende System ist so gestaltet, daß es zum einem über einen breiten Resonanzfrequenzbereich einstellbar ist und darüber hinaus auf einem breitbandigem Resonanzfrequenzbereich wirksam ist.

Nachfolgend wird die Erfindung anhand eines Ausführungsbeispiels unter Bezugnahme auf die Figuren näher erleutert.

Es zeigen:
Figur 1: ein Ausführungsbeispiel der erfindungsgemässen Vorrichtung,
Figur 2: die in Figur 1 dargestellte Vorrichtung um 90° gedreht,
Figur 3: ein Ausführungsbeispiel der erfindungsgemässen Vorrichtung

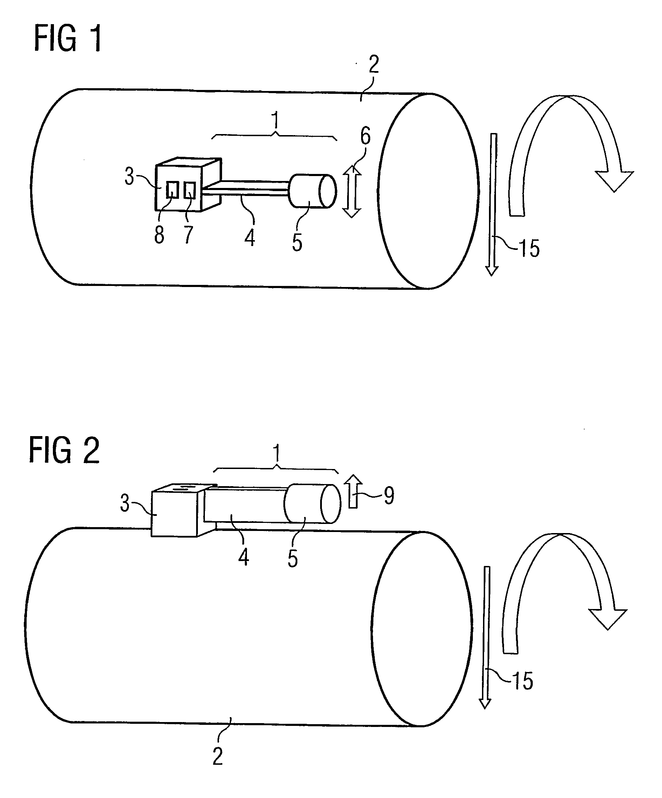

Figur 1 zeigt eine Vorrichtung, bei der ein elektrischer Verbraucher 3 auf einem rotierenden Element 2 montiert ist. Ein rechteckig und flächig ausgestaltetes Wandlerelement 4 ist mit diesem elektrischen Verbraucher 3 direkt verbunden. An den, dem Verbraucher gegenüberliegenden Ende des Wandlerelementes ist eine Schwungmasse 5 befestigt. In dem in Figur 1 dargestellten Betriebszustand wirkt auf die Schwungmasse 5 und damit auf das schwingende System 1, bestehend aus Schwungmasse 5 und Wandlerelement 4, die Gewichtskraft 15. Auf die Schwungmasse 5 wirkt bei einer weiteren Drehung um 180° die Gewichtskraft 15 in anderer Richtung. Durch diese, durch die Drehung um jeweils 180° verursachte wechselnde Krafteinwirkung auf die Schwungmasse 5 gerät das schwingende System 1 ins Schwingen. Damit liefert das Wandlerelement 4, sei es nun ein piezoelektrisches oder ein magnetostriktives oder ein magnetoelektrisches oder ein kapazitives Element elektrische Energie an den elektrischen Verbraucher 3. Dieser weist eine Gleichrichtereinrichtung 7 auf, die die vom Wandlerelement 4 gelieferte elektrische Wechselspannung gleichrichtet und im dargestellten Ausführungsbeispiel an eine Speichereinrichtung 8 weitergibt.

Des weiteren wirken auf das schwingende System 1 auch weitere Rotationskomponenten und zeitlich periodisch auftretende Kräfte. Diese haben ihre Ursache z. B. in Lagerreibung, Unwucht, Radreibung an unebenen Oberflächen. Auch Änderungen der Rotationsgeschwindigkeit führen ebenso zu Schwingungen im schwingenden System 1.

Figur 2 zeigt das gleiche Wandlerelement in einem anderen Betriebszustand. Hierbei ist gegenüber Figur 1 eine Drehung um 90° erfolgt, in diesem Falle wirkt zwar ebenfalls die Gewichtskraft 15 auf die Masse 5, bewirkt aber durch die Formgebung des Wandlerelementes 4 keine Verformung an dieser Stelle. Durch die Formgebung des Wandlerelements besteht keine Elastizität in dieser Richtung. Des weiteren wirkt zu diesem Zeitpunkt und natürlich, wie zu jedem anderen Zeitpunkt der Drehung auch, die Fliehkraft 9 auf die Masse 5. Führt jedoch ebenso wie die Gewichtskraft 15 in diesem Zeitpunkt nicht zu einer Auslenkung des Wandlerelements 4 und trägt somit nicht zur Schwingung des schwingenden Systems 1 bei. Dieser Effekt ist durch die besondere Formgebung des Wandlerelements 4 gegeben, da keine Elastizität in dieser Richtung am Wandlerelement gegeben ist.

Die Resonanzfrequenz des schwingenden Systems ist durch eine Abstimmung von Wandlerelement 4 zur Masse 5 auf einem breiten Frequenzspektrum einstellbar und so ausgestaltet, daß das Schwingende System 1 auf einem breitbandigem Resonanzfrequenzbereich wirksam ist.

Ist der elektrische Verbraucher 3 ein Funksensor, so erhält dieser ausreichend elektrische Energie um physikalische Parameter des beweglichen, bzw. rotierenden Elements 2, oder seiner Umgebung, zu erfassen und in zum Beispiel zeitlich vorbestimmten oder zufälligen Abständen mittels eines Funkprotokolls zu senden.

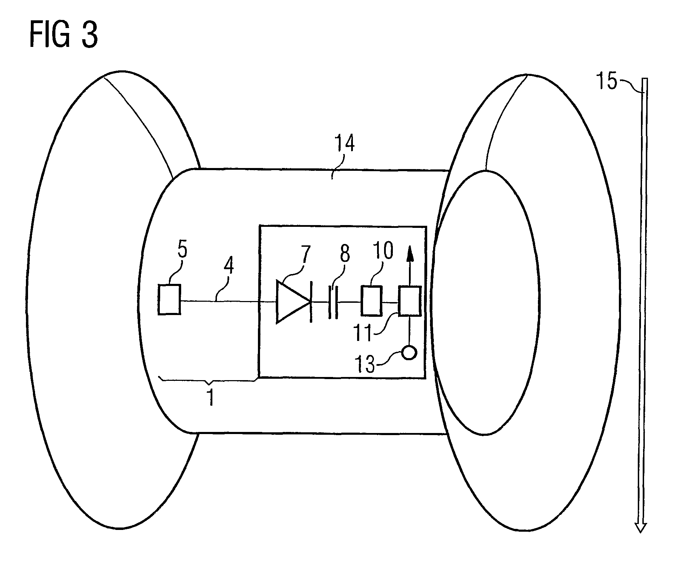

In einem in Figur 3 dargestellten Ausführungsbeispiel ist das schwingende System 1, mit seinem elektrischen Verbraucher 3 an einem Fahrzeugrad montiert, wobei die Trägheit der Masse 5 bei Beschleunigungen des Rads ein Schwingen des schwingenden Systems 1 bewirkt und damit das Wandlerelement 4 verformt.

Beschleunigungen des Rads treten auf zum Beispiel bei zunehmender oder abnehmender Drehzahl des Rads, sowie bei Unebenheiten der Fahrbahn oder Unwuchten des Rades. Die dabei im Piezowandler getrennten elektrischen Ladungen werden über die Gleichrichteeinrichtung 7 einer Speichereinrichtung 8 zugeführt.

Mit der in der Speichereinrichtung 8 gespeicherten elektrischen Energie wird eine Timerschaltung 10 versorgt, die periodisch in vorbestimmten, oder zufällig gewählten, Zeitabständen eine Prozessorsteuerung aktiviert, die gemeinsam mit einer Identifikationsnummer des elektrischen Verbrauchers 3 einen erfassten physikalischen Parameter mittels eines Hochfrequenzsenders 12 und einer angeschlossenen Antenne abstrahlt. Zur Erfassung des physikalischen Parameters dient dabei ein Sensor 13.

Zur Erhöhung der Übertragungssicherheit ist ein abgestrahltes Funktelegramm zumindest einmal wiederholbar. Das so abgestrahlte Funksignal wird von einem im Fahrzeug montierten Empfangssystem empfangen und weiterverarbeitet.

Die Speichereinrichtung 8 ist beispielhaft durch einen verlustarmen Kondensator dargestellt. Die Gleichrichteeinrichtung 7, die das vom Wandlerelement 4 erzeugte Wechselspannungssignal in ein Gleichspannungssignal wandelt, ist zum Beispiel aus einer Diode oder aus einer aus Halbleiterdioden gebildeten Gleichrichterschaltung gebildet.

Die Timerschaltung 10 in diesem Ausführungsbeispiel ist auf extrem geringen Energiebedarf ausgelegt, daß sie als einzige Komponente ständig mit Energie zu versorgen ist. Die Timerschaltung aktiviert in zeitlich vorbestimmten oder zufällig gewählten Abständen eine Prozessorschaltung 11, die den erfaßten physikalischen Parameter zusammen mit einer Identitätsnummer des elektrischen Verbrauchers 3 an eine Empfängereinrichtung weiterleitet.

Der Hochfrequenzsender 12 besteht im wesentlichen aus einem Hochfrequenzoszillator, der ein vorzugsweise ein schnelles Einschwingverhalten aufweist. Die Sendestufe des Hochfrequenzsenders ist ebenso auf geringem Stromverbrauch ausgelegt, und arbeitet mit einer hohen Bandbreite, um die Sendedauer klein zu halten. Damit ist eine Übertragung der Information in kürzester Zeit und damit mit geringst möglicher Verlustenergie möglich.

### Bezugszeichenliste

- 1: schwingendes System
- 2: bewegliches Element
- 3: elektrischer Verbraucher
- 4: Wandlerelement
- 5: Schwungmasse
- 6: Schwingungsebene
- 7: Gleichrichteeinrichtung
- 8: Speichereinrichtung
- 9: Fliehkraft
- 10: Timerschaltung
- 11: Prozessorschaltung
- 12: Hochfrequenzsender
- 13: Sensor
- 14: Rad
- 15: Gewichtskraft

## Patentansprüche

1. Vorrichtung bestehend aus,
- einem, entlang einer Rotationsachse, rotierbar ausgebildetem Element (2),
- einen am Element (2) befestigtem elektrischen Verbraucher (3),
- einem, mit dem elektrischen Verbraucher (3) elektrisch verbundenen Wandlerelement (4), wobei das Wandlerelement zur Umwandlung mechanischer Energie in elektrische Energie eine Elastizität aufweist und wobei das Wandlerelement und eine mit dem Wandlerelement (4) verbundene Schwungmasse (5) ein schwingendes System (1) bildet,
**dadurch gekennzeichnet, dass**
der Massenmittelpunkt der Schwungmasse (5) eine Bewegungsfreiheit auf einer gekrümmten Bahn aufweist,
wobei die durch die gekrümmte Bahn aufgespannte Fläche senkrecht auf der Richtung der durch eine Rotation des Elements (2) verursachten Fliehkraft (9) steht.

2. Vorrichtung nach Patentanspruch 1,
**dadurch gekennzeichnet, daß** die Elastizität des Wandlerelements (4) in nur einer Schwingungsebene (6) bevorzugt unterstützt ist.

3. Vorrichtung nach Patentanspruch 2,
**dadurch gekennzeichnet, daß** die Schwingungsebene (6) senkrecht zu der durch eine Bewegung und/oder Rotation des beweglichen und/oder rotierenden. Elementes (2) hervorgerufenen Fliehkraft (9) steht.

4. Vorrichtung nach einem der vorhergehenden Patentansprüche,
**dadurch gekennzeichnet, daß** die Rotationsachse des rotierenden Elements (2) verschieden zu der Richtung einer Gewichtskraft (15) ist, so daß die Gewichtskraft (15) bei Rotation des rotierenden Elementes (2) aus wechselseitiger Richtung auf das Wandlerelement (4) wirkt.

5. Vorrichtung nach einem der vorhergehenden Patentansprüche,
**dadurch gekennzeichnet, daß** die Rotationsachse des rotierenden Elements (2) senkrecht zu der Richtung einer Gewichtskraft(15) ist.

6. Vorrichtung nach einem der vorhergehenden Patentansprüche,
**dadurch gekennzeichnet, daß** das Wandlerelement (4) ein piezoelektrisches und/oder ein magnetostriktives und/oder ein magnetoelektrisches und/oder ein kapazitives Element ist.

7. Vorrichtung nach einem der vorhergehenden Patentansprüche,
**dadurch gekennzeichnet, daß** in dem elektrischen Verbraucher (3) eine Gleichrichtereinrichtung (7) die von dem Wandlerelement (4) gelieferte Wechselspannung gleichrichtet, angeordnet ist.

8. Vorrichtung nach einem der vorhergehenden Patentansprüche,
**dadurch gekennzeichnet, daß** in dem elektrischen Verbraucher (3) eine Speichereinrichtung (8) zur Speicherung der vom Wandlerelement (4) gelieferten elektrischen Energie angeordnet ist.

9. Vorrichtung nach einem der vorhergehenden Patentansprüche,
**dadurch gekennzeichnet, daß** der Funk-Sensor erfaßte Parameter zeitlich periodisch und/oder bei vorbestimmten Änderungen der Parameter überträgt.

10. Vorrichtung nach einem der vorhergehenden Patentansprüche,
**dadurch gekennzeichnet, daß** das Wandlerelement die Form eines rechteckigen Federbleches aufweist.

11. Vorrichtung nach einem der vorhergehenden Patentansprüche,
**dadurch gekennzeichnet, daß** das schwingende System (1) breitbandig auf verschiedene Anregungsfrequenzen anspricht.

## Claims

1. Apparatus consisting of
- an element (2) which is formed along a rotation axis and can rotate,
- an electrical load (3) which is attached to the element (2),
- a transducer element (4), which is electrically connected to the electrical load (3), with the transducer element having elasticity for conversion of mechanical energy to electrical energy, and with the transducer element and a flywheel mass (5) which is connected to the transducer element (4) forming an oscillating system (1),
**characterized in that**
the centre of gravity of the flywheel mass (5) has a freedom of movement on a curved path, with the area which is covered by the curved path being at right angles to the direction of the centrifugal force (9) which is caused by rotation of the element (2).

2. Apparatus according to Patent Claim 1,
**characterized in that**
the elasticity of the transducer element (4) is preferably supported on only one oscillation plane (6).

3. Apparatus according to Patent Claim 2,
**characterized in that**
the oscillation plane (6) is at right angles to the centrifugal force (9) which is caused by movement and/or rotation of the moving and/or rotating element (2).

4. Apparatus according to one of the preceding patent claims,
**characterized in that**
the rotation axis of the rotating element (2) is not the same as the direction of a weight force (15), as a result of which the weight force (15) acts on the transducer element (4) from a changing direction during rotation of the rotating element (2).

5. Apparatus according to one of the preceding patent claims,
**characterized in that**
the rotation axis of the rotating element (2) is at right angles to the direction of a weight force (15).

6. Apparatus according to one of the preceding patent claims,
**characterized in that**
the transducer element (4) is a piezoelectric and/or a magnetostrictive and/or a magnetoelectrical and/or a capacitive element.

7. Apparatus according to one of the preceding patent claims,
**characterized in that**
a rectifier device (7), which rectifies AC voltage produced by the transducer element (4) is arranged in the electrical load (3).

8. Apparatus according to one of the preceding patent claims,
**characterized in that**
a storage device (8) for storage of the electrical energy produced by the transducer element (4) is arranged in the electrical load (3).

9. Apparatus according to one of the preceding patent claims,
**characterized in that**
the radio sensor transmits detected parameters periodically in time and/or when predetermined changes occur in the parameters.

10. Apparatus according to one of the preceding patent claims,
**characterized in that**
the transducer element has the shape of a rectangular spring plate.

11. Apparatus according to one of the preceding patent claims,
**characterized in that**
the oscillating system (1) responds over a broad bandwidth to different excitation frequencies.

## Revendications

1. Dispositif composé:
- d'un élément (2) configuré pour pouvoir effectuer une rotation le long d'un axe de rotation,
- d'une charge électrique (3) fixée à l'élément (2),
- d'un élément convertisseur (4) relié électriquement à la charge électrique (3), l'élément convertisseur présentant une élasticité pour la conversion d'énergie mécanique en énergie électrique et l'élément convertisseur ainsi et une masse d'inertie (5) relié à l'élément convertisseur (4) formant un système oscillant (1),
**caractérisé en ce que**
le centre de gravité de la masse d'inertie (5) présente une liberté de mouvement sur une trajectoire courbe, la surface couverte par la trajectoire courbe étant perpendiculaire à la direction de la force centrifuge (9) provoquée par une rotation de l'élément (2).

2. Dispositif selon la revendication 1, **caractérisé en ce que** l'élasticité de l'élément convertisseur (4) n'est de préférence assistée que dans un seul plan d'oscillation (6).

3. Dispositif selon la revendication 2, **caractérisé en ce que** le plan d'oscillation (6) est perpendiculaire à la force centrifuge (9) provoquée par un mouvement et/ou une rotation de l'élément (2) mobile et/ou rotatif.

4. Dispositif selon l'une des revendications précédentes, **caractérisé en ce que** l'axe de rotation de l'élément (2) rotatif est différent de la direction d'un poids (15), de sorte que le poids (15) agit dans une direction réciproque sur l'élément convertisseur (4) lors de la rotation de l'élément rotatif (2).

5. Dispositif selon l'une des revendications précédentes, **caractérisé en ce que** l'axe de rotation de l'élément rotatif (2) est perpendiculaire à la direction d'un poids (15).

6. Dispositif selon l'une des revendications précédentes, **caractérisé en ce que** l'élément convertisseur (4) est un élément piézoélectrique et/ou magnétostrictif et/ou magnétoélectrique et/ou capacitif.

7. Dispositif selon l'une des revendications précédentes, **caractérisé en ce que** dans la charge électrique (3) est disposé un dispositif redresseur (7) qui redresse la tension alternative délivrée par l'élément convertisseur (4).

8. Dispositif selon l'une des revendications précédentes, **caractérisé en ce que** dans la charge électrique (3) est disposé un dispositif d'accumulation (8) pour accumuler l'énergie électrique délivrée par l'élément convertisseur (4).

9. Dispositif selon l'une des revendications précédentes, **caractérisé en ce que** le capteur radioélectrique transmet les paramètres détectés périodiquement dans le temps et/ou en cas de modifications prédéfinies des paramètres.

10. Dispositif selon l'une des revendications précédentes, **caractérisé en ce que** l'élément convertisseur présente la forme d'une tôle élastique rectangulaire.

11. Dispositif selon l'une des revendications précédentes, **caractérisé en ce que** le système oscillant (1) réagit à large bande à différentes fréquences d'excitation.
